# EUROPEAN PATENT SPECIFICATION

(11) **EP 1 473 189 B1**
(45) Date of publication and mention of the grant of the patent: **21.12.2016**
(21) Application number: 03257503.7
(22) Date of filing: 28.11.2003
(51) Int. Cl.: B60P 1/28

(54) **Mining hopper made up of steels and polymers**
Kippmulde aus Stahl und Polymeren
Benne réalisée en aciers et polymères

(30) Priority: 30.04.2003 CL 8732003
(43) Date of publication of application: 03.11.2004
(73) Proprietor: DURATRAY LATINOAMERICA SpA, Antofagasta (CL)
(72) Inventor: Medel, Manuel Antonio, Las Condes (CL)
(74) Representative: Instone, Alicia Claire

(56) References cited:
- FR-A- 1 209 761
- GB-A- 1 512 511
- GB-A- 1 517 467
- US-A- 4 029 354
- US-A- 6 022 068
- US-A1- 2003 160 049
- US-B1- 6 478 176

## Description

### BACKGROUND TO THE INVENTION

There are at present many structures for container structures, receiving boxes and/or hoppers for mining, construction and for any activity involving in general the transport of rocks, gravel and ballast from mining deposits or from the industrial activities for which they are useful, operating under the most different and various geographic and weather conditions. To this, the variability and plurality of the material transported is added, which is always varying as regards titration, weight, humidity, chemical composition and adhesion, among many other characteristics. Notwithstanding the characteristics of the environment where these boxes or containers operate, their design and construction have been made considering engineering and construction rules, which do not take into account the successful solution of the following: weight, less adhesion of items transported, technological innovation as regards the products with which they are manufactured, environmental protection and care, among many other factors. The state of the art just repeats container boxes in different shapes, which are based on technical specifications and design parameters that have not significantly varied during the last years, nor has the type of material with which they are built significantly changed, which remains to be steel in its different modalities and characteristics. On the other hand, in the industrial activity in general and in the construction activity and mining in particular, the ever increasingly globalized economy has forced these activities to reduce their operating costs, by investing and developing programs leading to processes and inputs with the greatest technological contribution, which may in turn lead to a lower cost for its products and services, among other things, and to these becoming environment-friendly. The greater distances to be traveled by trucks when transporting ore for its processing and storing as the result of the expansion of the ore vein, require a bigger use and wear of the same, mainly of the structure or container box of material. Due to this, the quality and safety required for the container boxes and/or hoppers as regards the removal and transport of ore, the efficacy and durability of the elements, the technological development concerning new materials for the construction of the same and the care of the environment they may contribute, are currently critical in these specific lines of business.

At present, the structures, container boxes or hoppers are totally built on the basis of steel plates. These steels of different strengths and thickness which together make up the whole structure of hoppers, raise several issues at present, which have not been successfully solved by the current state of the art. In this respect, we may quote the non-uniform distribution of the material transported over the hopper's body for example, which eventually generates an excess wear of the truck's tires. Another unsolved problem is the stress of the steel due to the impact and abrasion conditions, both in the filling and pouring processes of container boxes, which situation leads to time and resources being lost due to the compulsory maintenance processes of them, as well as limiting the hopper's useful life. These are design problems preventing the best use of the transport structure, thus increasing the impacts and noise resulting from its steel nature which have an effect or impact on the machine operators and the environment. Also, according to the climate conditions and the material's humidity content, the current steel hoppers have not been able to solve the issue of the material transported becoming bonded or adhered to its steel structure, thus dramatically reducing its efficiency in unloading material. The regular maintenance work done on these steel structures as a result of damage by impacts and abrasion increase the accident rate in addition to the obvious time lost in non-productive activities, among others. Thus, and as an example, we are able to state that under the current state of the art, we may find structures or container boxes of various sizes and weights and of different designs and shapes, but which are always totally built of different varieties of steel: some of them are built in wearing steel with its frame based on "T" beams, while other container boxes or hoppers are built with different kinds of steels and structured in "U" bent beams which - once welded to each other - keep the material-transporting structure, with this material thus meeting a double function of structurally supporting the hopper and also shielding it against impacts and the wear produced by the load transported. In this way, we are able to conclude that what is known in this line of business to date has been given by structures or container boxes which have considered for their design and construction the rules provided within the last one hundred years, that is, built of steel, where the metal or steel structures making it up also act as structural base and shielding, and with steels eventually performing the traditional structural function, as well as strength to abrasion and to impacts from the materials transported.

Background art is provided in GB 1,517,467 (SKEGA AB), which discloses a loading cage for a haulage vehicle for carrying bulk goods. The loading cage comprises a frame structure and within said structure a layer of an elastomer material forming at least the bottom of the loading cage. The elastomer layer is freely suspended from its longitudinal edges within the structure and supported by a carrying harness. The carrying harness is also freely suspended within the structure and consists of one or more ropes or like filamentary members arranged to have a plurality of transverse runs spaced apart in the longitudinal direction.

### SUMMARY OF THE INVENTION

The invention is a mining hopper as claimed in Claim 1.

### BRIEF DESCRIPTION OF THE DRAWINGS

Figure 1 shows a general view of the mixed-constructed hopper, that is, steels plus polymers;
Figure 2 shows the set of rubber parts of the hopper;
Figure 3 shows a view of the longitudinal and transversal beams;
Figure 4 shows a cross-front view of the elliptical beam and the two side faces with a rubber strand in its upper ends;
Figure 5 shows a view of the beams with cavities and holes, which act as housing for ropes and their fastening system;
Figure 6 shows a fastening system;
Figure 7 shows the rubber bottom with its volume being increased in its rear or back portion;
Figure 8 shows the ropes, cavities and fastening system;
Figure 9 shows the location of ropes from the lower part of the hopper;
Figure 10 shows the rubber blocks over the side walls; and
Figure 11 shows a view of the shape of side and front walls.

### DETAILED DESCRIPTION OF PREFERRED EMBODIMENTS

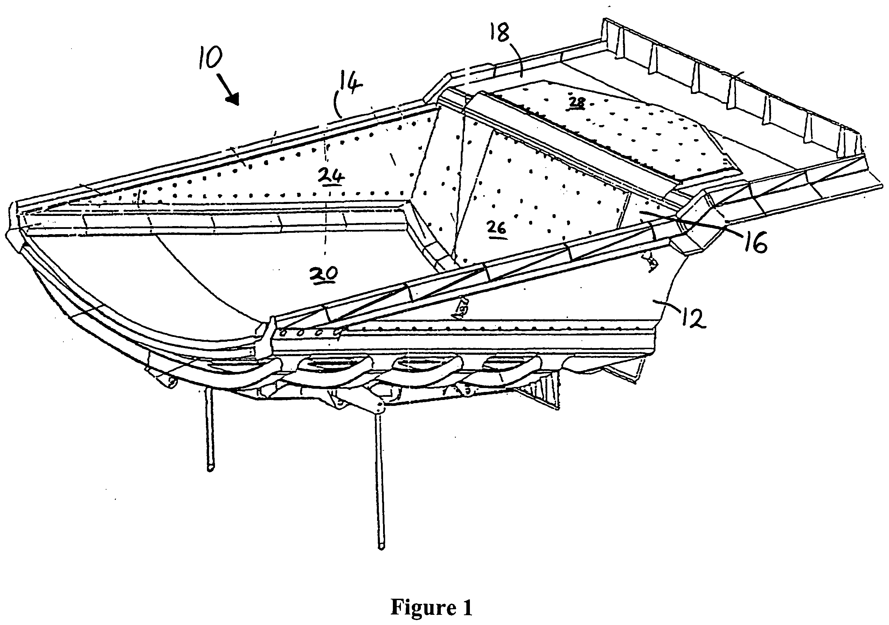

This patent application relates to a structure or box for transport, which instead of being totally manufactured and made up of steel - whatever its technical features or thickness - is built on the basis of a mixed structure of polymers and steels. In this way, polymers themselves are the body of the hopper on the one hand, with these polymers being the portion where load is transported and, therefore, bearing the impact and wear and tear requirements caused by the material transported, and becoming incorporated to the hopper's steel element through different systems of fastening, adjustment and suspension and, on the other hand, the metal structure fulfils an unknown function in hoppers, that is, becoming a fastening and supporting element for the polymeric component and not becoming a material-carrying surface or shield against impacts and wear and tear of the same (Figure 1). We have therefore as a result a transporting box built from mixed material where polymers become a significant percentage of the hopper's total structure, this being why its parts and pieces, such as the bottom, side walls, front section, side plates, visor and external areas are manufactured of polymers or made up of steel parts and polymers.

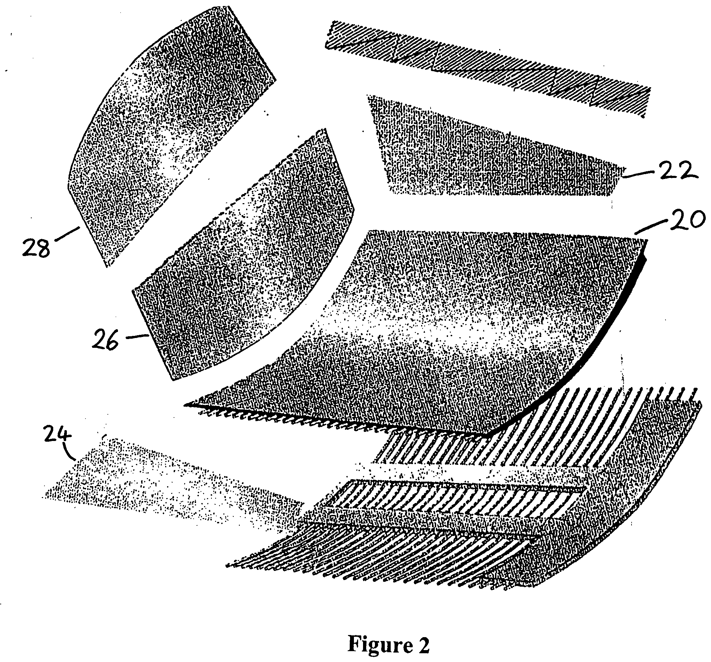

Thus, with reference to Figure 2, one of the main elements of the hopper 10 is made up of a floor or bottom for the storage of material structured as a rubber mat 20 hanging on cross elastomeric ropes, which - after being placed parallel to each other - adjust to the structure of the side wall of the box via a fastening system made up of clamps and bolts, which system is also useful as a system to adjust the stress of the same. The hanging rubber mat 20 is a single body and is totally made up of polymers which conformation is destined for being resistant to abrasion and impacts. The thickness of the mat varies and is determined according to the area bearing the greatest impact and abrasion stress required by the different applications.

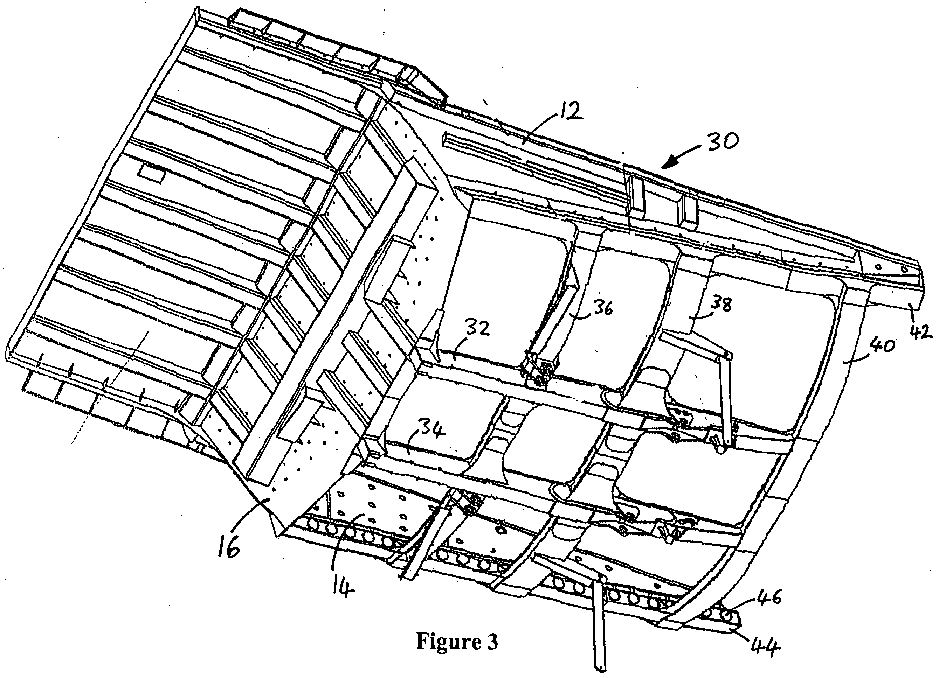

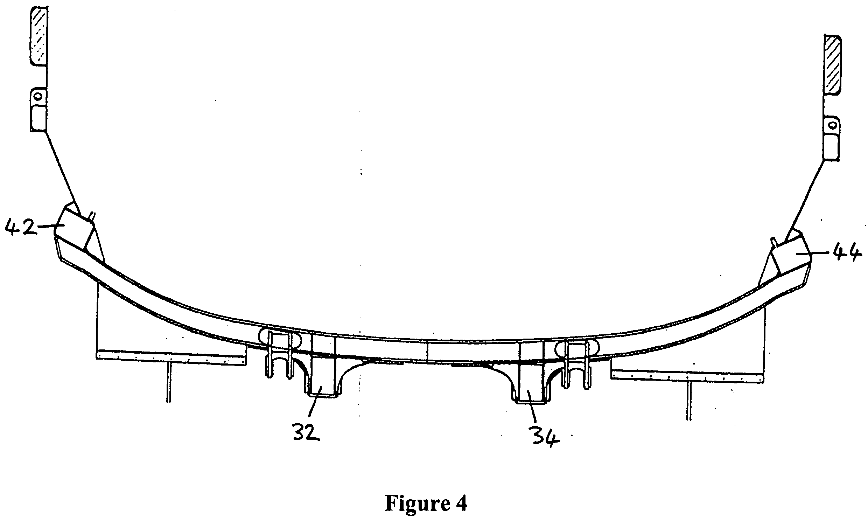

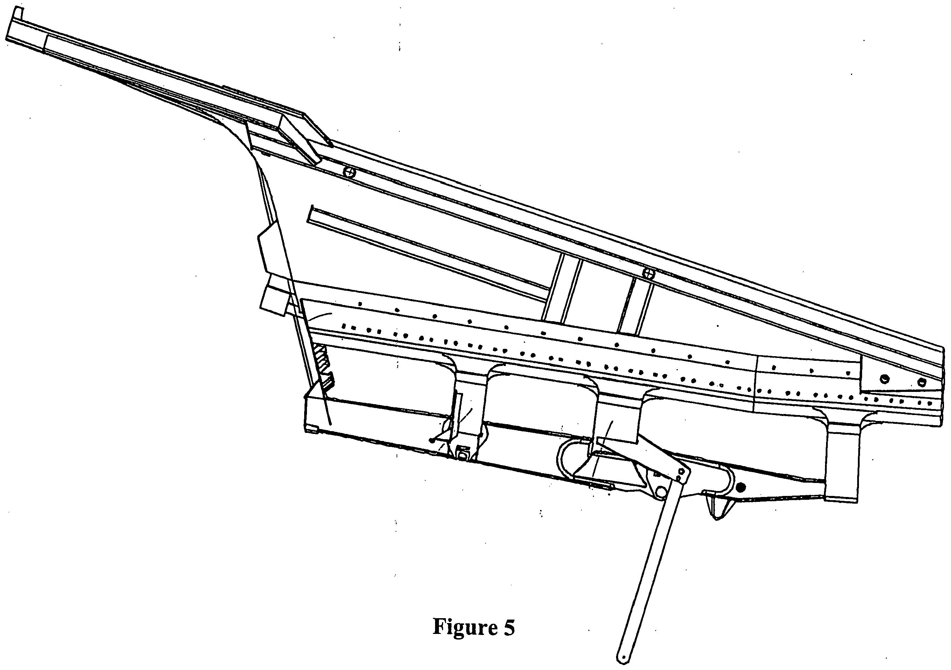

With reference to Figures 3 and 4, the hopper's steel structure 30 acting as a supporting and fastening element for the polymers is made up of a frame of two square-shaped longitudinal, straight beams 32, 34, separated from each other by the distance equal to the beams of the truck chassis where they will be used, and three or four square-shaped transversal elliptical beams 36, 38, 40, which - once placed in an equidistant and perpendicular way to the longitudinal beams - make up the base for the hopper's steel structure 30. The two ends of the transversal elliptical beams are covered in all the surface by two square-shaped longitudinal beams 42, 44 which are parallel and of the same length as longitudinal beams 32, 34. This beam, in turn, accommodates in all its length and transversely, round or square cavities 46 whose purpose - once they have been placed in a parallel and continuous way - is to house the adjustment and supporting mechanism for the rubber guy cables which support the rubber hanging bottom of the hopper (Figure 5).

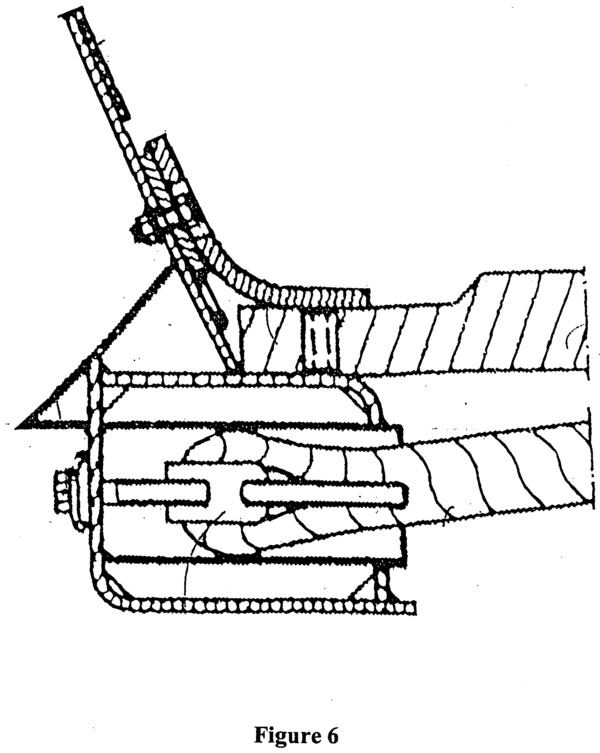

As shown in Figure 6, this fastening and supporting mechanism is made up of a metal plate box with two holes in the outer end, which house two adjustment bolts screwed to a metal latch and support the rubber cables by both ends, which in turn support the rubber hanging bottom 20 of the hopper.

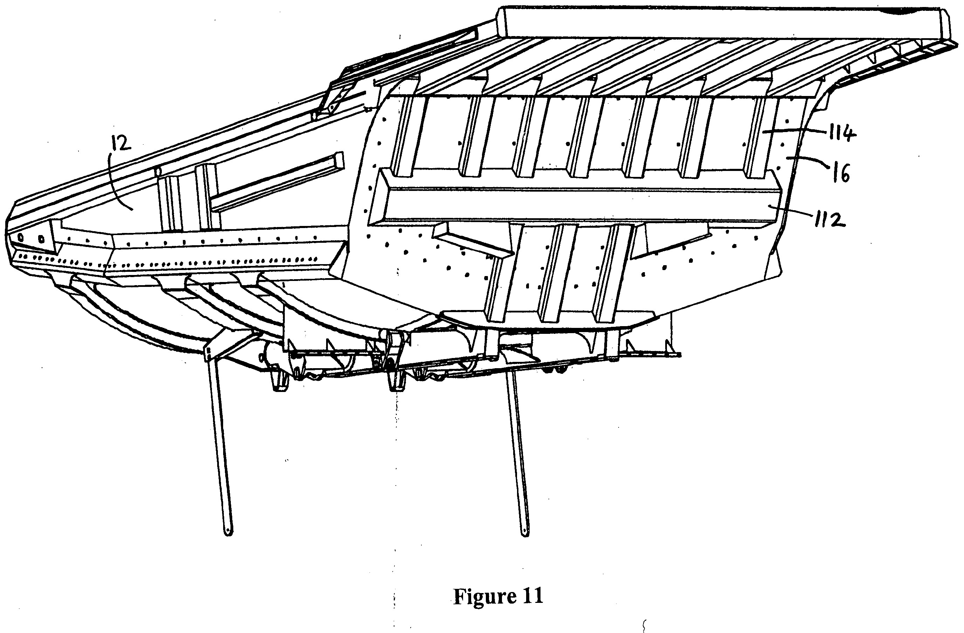

This structural base of steel supports in turn three walls: one front and two side walls. The side walls 12, 14 have a trapezoid shape reinforced in the upper edge by a pentagonal steel beam, which covers its whole length and houses in its upper portion rubber blocks, which - once placed in a parallel and continuous way - make up a protecting side edge for the top of the side wall. These side walls are parallel placed over the longitudinal beams which house the fastening and supporting system and show in its whole surface small holes, whose purpose is to act as a basis for the bolts fastening the rubber mats which cover the whole surface of both side walls and which meet the function of shielding against impacts and abrasion (Figure 11). The third wall 16, called front wall, is built of steel and is located in the front end of the hopper's base, showing a hyperbolic hexagonal base and rectangular shape reinforced in its outer face by a set of C cross-section horizontal 112 and vertical 114 beams. The front wall 16 shows a variable number of small holes in its whole surface, whose function is to act as supporting for fastening bolts in order to place an inner rubber mat 26, which is incorporated to the front wall 16 as just one piece and in a continuous thickness, with its function being to act as protection against impacts and abrasion. Walls, both front and side ones, show fastening metal structures in its lower ends, which - by containing holes - allow for fastening protection plates over the front and longitudinal end of the rubber mat, which acts as hopper's bottom.

To the upper end of the front wall 16, a metal plate 18 joins which - projecting from the front wall 16 - acts as a visor to protect the front portion of the truck against possible falling or displacement of the material transported, so as to provide the cabin of the truck, the driver and the truck's engine with proper protection. Said steel visor 18 is made up of a low-thickness steel plate reinforced in its lower part with longitudinal and transversal beams of the C type and covered in its whole surface by a rubber mat 28 made up of just one continuous thickness piece, fastened with bolts and performing the function of covering the steel area (Figures 1 and 2).

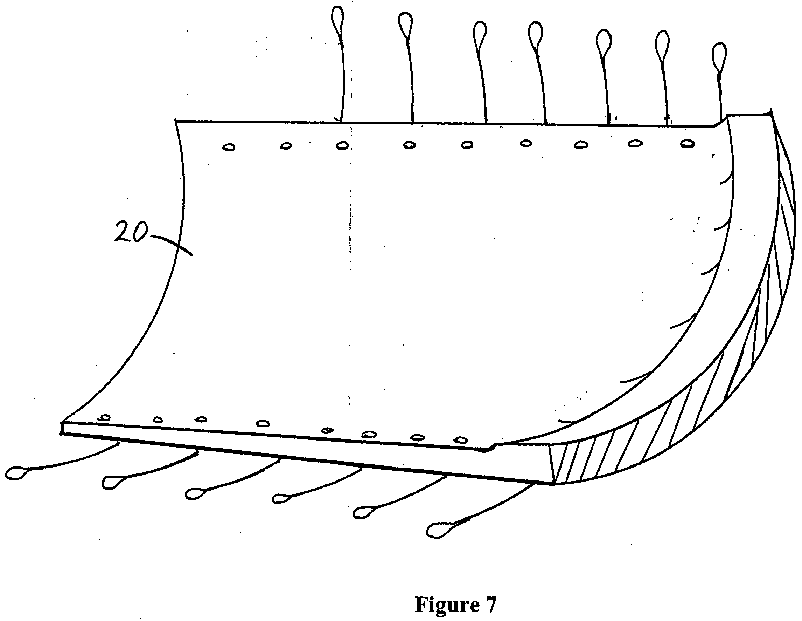

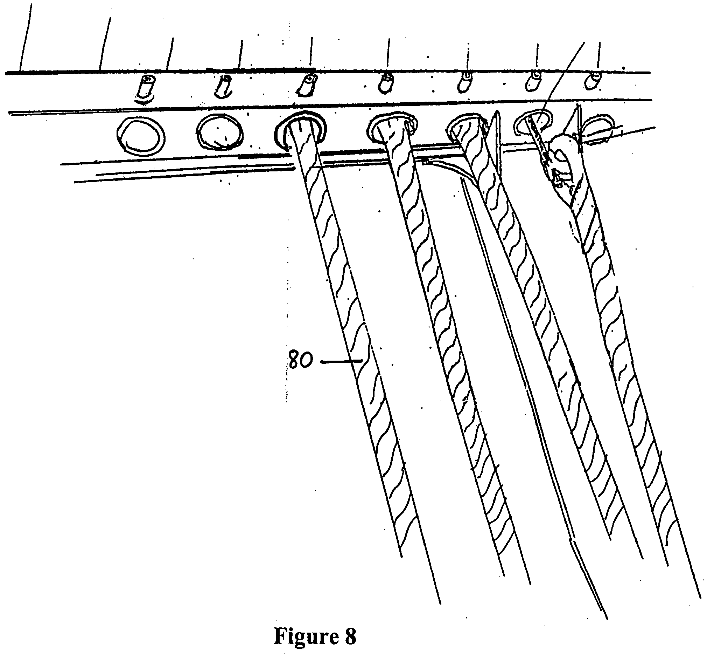

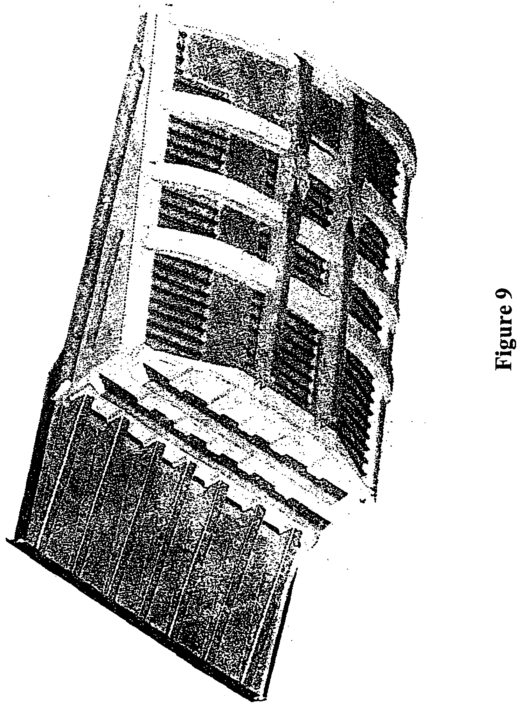

As already mentioned, the thickness of the rubber mat 20 acting as the bottom of the hopper is variable and determined according to the area where the impact and abrasion is greatest in the different applications required. As shown in Figure 7, this same characteristic allows one to construct or make up in the rear portion or final third of the hanging rubber mat 20 a greater thickness or volume which operates as a retaining section, which under a tilting degree not over 20% allows the making up of a better filling cone, thus enabling a better and more efficient filling of the hopper and avoids the spillage of the material transported. In order to analyse the design of the hanging rubber mat 20, the theory of the maximum deformation energy was considered, which foresees that the fault caused by fluency occurs when the total deformation energy of a unit volume is equal to or exceeds the deformation energy value of the same volume corresponding to the flow strength in stress or compression. From this, it is derived that the polymer behaves as just one resisting body. Also, the turning force of the mobile transporting the hopper is absorbed by the hanging rubber mat 20 and scattered to the total structure by elastomeric ropes. Also, shock loads are substantially dampened as the rubber mat 20 acts as a "hammock". Consequently, the traditional concept of supporting and resisting the hopper in the process of loading, unloading and transporting is dramatically changed, since the weight of the material transported, as well as the wear produced by the load transported, wholly lies in the rubber structures and the elastomeric ropes, with the steel structure, which makes up a part of the hopper, acting just as support for the polymers and not as a wear element. The rubber mat or bottom 20 hangs over ropes or strings manufactured as polyester fibres covered with rubber in its whole length and individually adjusted to the container box or hopper, thus allowing one to keep a nominal distance between the rubber mat and the lower steel structure of the hopper, which situation allows for the simple and safe maintenance of the same (Figure 8). In order to provide the necessary elasticity, all ropes 80 are parallel oriented, thus allowing that these may endure some narrowing during the loading process and even though come back to its original length when the body is emptied. These ropes are fastened to the hopper's structure through a mechanism which in turn allows for its fastening and stress adjustment of each component (Figures 6, 8 and 9). As the bottom, the front section or the inside front wall 16 of the hopper is covered with rubber 26 and fastened to the rubber bottom 20 by mechanical fastening or blocks made up of steel or rubber in order to protect the joints against impacts and abrasion. The front rubber mat 26 covers the total inner front section 16 of the hopper, thus allowing to reduce the thickness of the steel used in said section and with the front rubber mat 26 undertaking all requirements of impact and abrasion. Also, this patent application considers removable and adjustable rubber blocks mechanically placed in different outer sectors of the container box body, so that they may act as shielding and/or dampening sections of the elements which may fall or come out of the container box, with the clear benefit of protection for the box, tires, the cabin of the truck and the operator of the unit.

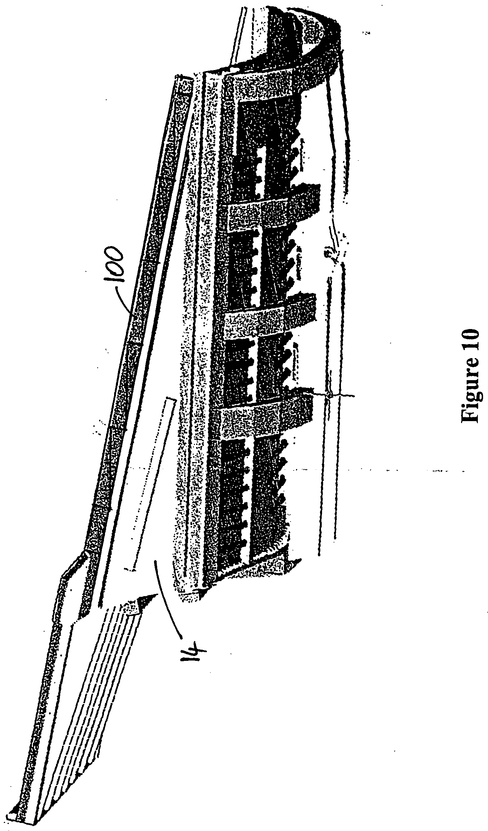

As regards the hopper's side walls 12, 14, these are in turn made up in its whole upper or overside portion by a "strand" or rubber blocks 100 which make up it and become incorporated to the same through such mechanical means as bolt fastening, with a part of its inner body being coated by rubber and allowing to reduce the steel thickness acting as support (Figures 4 and 10).

As an option, the visor or upper front section of the hopper, like the bottom of the hopper, may be made up of a rubber mat hanging over transversal elastomeric ropes, which are in turn adjusted to the edges of the visor through a mechanical fastening system and being flanked if necessary by adjustable and removable rubber blocks, whose function is to prevent the overflowing of the material transported by said area.

The stress adjustment system or mechanism for the elastomeric ropes is made up of a cast steel latch, through which the elastomeric rope is hooked, held up and stressed by the action of two bolts which once incorporated to the hopper by the outside, go through the cast part and make up a system which in turn and in a number not lower than twenty act inside the two square-shaped section longitudinal beams of the hopper, being incorporated to these beams in the form of round or square cavities placed in a parallel and continuous way over the whole length of these beams. This stress adjustment mechanism allows to adapt the model to different types of ore, thus allowing for the optimisation of the operation of the same (Figures 6 and 8).

The wear ranges or margins of the rubber mat 20 making up the bottom, the absorbing and shielding outer rubber blocks and of the mat and retaining rubber blocks, which make up the visor and front section, may be monitored at regular specific intervals and its useful life may be foreseen. Since these rubber elements are wear resistant and due to their fastening system to the hopper's body, which make them easily and quickly removable, the regular monitoring of these may note a damage, which once being detected, may be repaired quickly and safely before a greater damage is produced.

Among the advantages provided by the object which is the subject matter of this application, the reduction of weight in several tons should be noted, depending on the size of the truck which, combined with the improved hanging of the useful load, gives the possibility of increasing said load without increasing the truck rolling resistance. Also, this appears to be an excellent solution to the problem of transporting sticky material. The rubber mat in fact stops the dirt or gravel from becoming stuck or adhered under cold weather conditions, since it is permanently moving during the transport. During the pouring process, the elastomeric ropes 80 return to their original length and bend the rubber mat 20, thus catapulting any material which has remained bond at the bottom or in the corners. Wastes of the material transported and adhered to the box, have been almost eliminated.

Another advantage of this hopper is its feature of automatic centring of load. The rubber mat 20 in fact, when it is supported by the ropes 80, forms a concave shape and the material loaded in the body tends to end at the bottom's centre, thus resulting in a reduction of uneven forces in the structure of chassis and tires. This characteristic allows in turn that the unloading speed decreases, with the rubber mat showing a better performance to abrasion.

An additional advantage of this hopper should be especially mentioned and this is the health of the operator or driver of the truck. The transmission of vibrations to the cabin during the loading, travelling and unloading is substantially lower than in the case of traditional steel hoppers. Also, the noise of the hopper's loading and unloading is another issue which may affect the environment and which has also received much attention in the industry. It is evident that even a relatively short period of exposure to strong noises may cause a permanent damage to human hearing and to the whole community near these activities. In this respect, and since this hopper has been mainly structured in rubber, it absorbs the noise produced during the filling and pouring process of this structure.

In addition, the ease and safety to change the rubber components make the availability of this hopper better in the industrial activities in which it operates.

## Claims

1. A mining truck hopper (10) for the transport of waste rock and ore materials, having a mixed structure comprising a steel structure (30) and a polymeric component (20, 22, 24, 26, 28), which is fastened to and supported by the steel structure and includes a bottom or base, for storage of the material, structured as a rubber mat (20) hanging on parallel elastomeric ropes, wherein the polymeric component makes up a body of the hopper, bearing impact and wear caused by the transported material,
**characterised in that** a rear portion of the mat is thickened to form a retaining section with a tilting degree not over 20%, forming a filling cone that improves the filling process of the hopper, avoids spillage of the material during transport and bears maximum impact and abrasion stresses caused by the material.

2. A mining truck hopper according to claim 1, having side walls (22, 24), a front section (26), oversides, a visor (28) and outer areas which are built of the polymeric component or made up of polymers and steel parts.

3. A mining truck hopper according to claim 1, wherein the parallel ropes are narrowed during loading of the hopper and return to their original lengths when the body is emptied.

4. A mining truck hopper according to claim 1, wherein the parallel ropes are arranged to adjust to a side wall structure of the hopper via a fastening system made up of clamps and bolts, which mechanism is used to adjust the stress of the ropes.

5. A mining truck hopper according to claim 4, wherein said mechanism comprises a metal plate box including, in an outer end thereof, two holes housing two adjustment bolts which screw to a metal latch to support a respective one of the ends of the ropes, which ropes, in turn, support the mat.

6. A mining truck hopper according to claim 1, wherein a base of the steel structure is made up of two square-shaped longitudinal, straight beams (32, 34) and three or four square-shaped transverse elliptical beams (36, 38, 40), arranged equidistant and perpendicular to the longitudinal beams (32, 34), and supports a front wall (16) and two side walls (12, 14) of the hopper, wherein the front wall has a rectangular shape and a hexagonal, hyperbolic base, and the side walls have trapezoidal shape.

7. A mining truck hopper according to claim 6, wherein the side walls (12, 14) and the front wall (16) show surfaces having small holes for supporting bolts in the whole surface, directed to fastening the mat and, in turn, shielding against impact and abrasion.

8. A mining truck hopper according to any of the preceding claims, wherein the polymeric component behaves as just one resistant body, thus absorbing turning forces and shock forces, as well as impacts and wear produced by the transported material, avoiding adhesion of sticky or frozen material and reducing noise and vibrations during operation.

9. A mining truck hopper according to claim 3, wherein the ropes comprise polyester fibres covered with rubber throughout their lengths, are arranged to adjust to the steel structure individually.

10. A mining truck hopper according to claim 1, comprising removable and adjustable rubber blocks arranged in external sectors of the steel structure to act as shielding and/or to provide absorption for material falling out of the hopper during transport.

11. A mining truck hopper according to claim 6, wherein each of the side walls (12, 14) includes in an upper portion thereof a strand of rubber blocks (100) incorporated into the hopper via mechanical means to allow for a reduced thickness of steel in the steel structure.

12. A mining truck hopper according to claim 1, wherein the steel structure (30) defines a frame over which the polymeric component hangs.

13. A mining truck hopper according to claim 1 or claim 12, having an inner body coated with rubber whereby the hopper is of reduced weight and the steel structure comprises steel of reduced thickness, acting as support and, together with a thus improved suspension of useful load, provides for increasing such load without increasing rolling resistance of the truck.

14. A mining truck hopper according to claim 1, the mat has a concave shape to allow for automatic centring of the load placed in it, thus resulting in a reduction of uneven force in a chassis structure and tires of the truck during transport.

## Patentansprüche

1. Bergbau-LKW-Mulde (10) für den Transport von Taubgestein und Erzmaterialien, eine gemischte Struktur aufweisend, beinhaltend eine Stahlstruktur (30) und eine Polymerkomponente (20, 22, 24, 26, 28), welche an der Stahlstruktur befestigt ist und von dieser gestützt wird und einen Boden oder eine Basis umfasst, für die Lagerung des Materials, strukturiert als Gummimatte (20), die an parallelen Elastomerseilen hängt, wobei die Polymerkomponente einen Körper der Mulde bildet, der Stoß und Abnutzung, die vom transportierten Material verursacht werden, erträgt, **dadurch gekennzeichnet, dass** ein Hinterteil der Matte verdickt ist, um einen Halteabschnitt mit einem Kippgrad von nicht mehr als
20 % auszubilden, wobei ein Füllkegel ausgebildet wird, der den Füllprozess der Mulde verbessert,
Verschütten des Materials während des Transports vermeidet und maximale Stoß- und Abriebbeanspruchungen, die vom Material verursacht werden, erträgt.

2. Bergbau-LKW-Mulde gemäß Anspruch 1, die Seitenwände (22, 24), einen Vorderabschnitt (26), Überseiten, ein Visier (28) und Außenbereiche aufweist, die aus der Polymerkomponente gefertigt sind oder aus Polymeren und Stahlteilen gebildet sind.

3. Bergbau-LKW-Mulde gemäß Anspruch 1, wobei die parallelen Seile während des Ladens der Mulde eingeengt sind und auf ihre ursprünglichen Längen zurückkehren, wenn der Körper entleert wird.

4. Bergbau-LKW-Mulde gemäß Anspruch 1, wobei die parallelen Seile angeordnet sind, um über ein Befestigungssystem aus Klemmen und Bolzen, dessen Mechanismus verwendet wird, um die Beanspruchung der Seile anzupassen, an eine Seitenwandstruktur der Mulde angepasst zu werden.

5. Bergbau-LKW-Mulde gemäß Anspruch 4, wobei der Mechanismus einen Metallplattenkasten beinhaltet, der in einem Außenende davon zwei Löcher umfasst, worin zwei Einstellschrauben untergebracht sind, die mit einem Metallriegel verschraubt sind, um ein jeweiliges der Enden der Seile zu stützen, wobei die Seile folglich die Matte stützen.

6. Bergbau-LKW-Mulde gemäß Anspruch 1, wobei eine Basis der Stahlstruktur aus zwei quadratischen, längs verlaufenden, geraden Balken (32, 34) und drei oder vier quadratischen quer verlaufenden elliptischen Balken (36, 38, 40), die äquidistant und senkrecht zu den längs verlaufenden Balken (32, 34) angeordnet sind, gebildet ist und eine Vorderwand (16) und zwei Seitenwände (12, 14) der Mulde stützt,
wobei die Vorderwand eine rechteckige Form
und eine sechseckige, hyperbolische Basis aufweist und die Seitenwände eine trapezförmige Form aufweisen.

7. Bergbau-LKW-Mulde gemäß Anspruch 6, wobei die Seitenwände (12, 14) und die Vorderwand (16)
Oberflächen zeigen, die kleine Löcher zum Stützen von Schrauben in der gesamten Oberfläche aufweisen, eingerichtet zum Befestigen der Matte und folglich Abschirmen gegen Stoß und Abrieb.

8. Bergbau-LKW-Mulde gemäß einem der vorhergehenden Ansprüche, wobei sich die Polymerkomponente wie nur ein widerstandsfähiger Körper verhält, wodurch Drehkräfte und Schlagkräfte sowie Stöße und Abnutzung, die vom transportierten Material produziert werden, absorbiert werden, wodurch Adhäsion von klebrigem oder gefrorenem Material vermieden und Lärm und Erschütterungen während des Betriebs reduziert werden.

9. Bergbau-LKW-Mulde gemäß Anspruch 3, wobei die Seile Polyesterfasern beinhalten, mit Gummi über ihre gesamten Längen bedeckt, die angeordnet sind, um sich individuell an die Stahlstruktur anzupassen.

10. Bergbau-LKW-Mulde gemäß Anspruch 1, beinhaltend entfernbare und anpassbare Gummiblöcke, die in externen Sektoren der Stahlstruktur angeordnet sind, um für Material, das während des Transports aus der Mulde herausfällt, als Abschirmung zu wirken und/oder Absorption bereitzustellen.

11. Bergbau-LKW-Mulde gemäß Anspruch 6, wobei jede der Seitenwände (12, 14) in einem Oberabschnitt davon einen Strang aus Gummiblöcken (100) umfasst, die über mechanische Mittel in die Mulde einbezogen sind, um eine reduzierte Dicke des Stahls in der Stahlstruktur zu erlauben.

12. Bergbau-LKW-Mulde gemäß Anspruch 1, wobei die Stahlstruktur (30) einen Rahmen definiert,
über den die Polymerkomponente hängt.

13. Bergbau-LKW-Mulde gemäß Anspruch 1 oder Anspruch 12, die einen Innenkörper aufweist, der mit Gummi beschichtet ist, wobei die Mulde von reduziertem Gewicht ist und die Stahlstruktur Stahl von reduzierter Dicke beinhaltet, der als Stütze wirkt und zusammen mit einer somit verbesserten Aufnahme der Nutzlast für eine Erhöhung einer solchen Last sorgt, ohne den Rollwiderstand des LKWs zu erhöhen.

14. Bergbau-LKW-Mulde gemäß Anspruch 1, wobei die Matte eine konkave Form aufweist, um automatische Zentrierung der darin platzierten Last zu erlauben, was in einer Reduzierung von ungleichmäßiger Kraft in einer Chassisstruktur und Reifen des LKWs während des Transports resultiert.

## Revendications

1. Trémie de tombereau (10) pour le transport de roches stériles et de minerais, composée d'une structure mixte comprenant une structure d'acier (30) et d'un composant polymère (20, 22, 24, 26, 28), fixé sur la structure d'acier, et supporté par celle-ci, et comprenant un fond ou un socle pour le stockage de matériel, structuré comme un tapis de caoutchouc (20) accroché à des cordes élastomères parallèles, le composant polymère formant un corps de la trémie, en supportant les chocs et l'usure causés par les matières transportées.
**caractérisée en ce que** l'épaisseur d'une partie postérieure du tapis a été renforcée afin de constituer une section de retenue avec un degré d'inclinaison ne dépassant pas 20%, en formant un cône de remplissage améliorant le processus de remplissage de la trémie, évitant les déversements de matières au cours du transport, et absorbant le maximum de chocs et de contraintes d'abrasion causés par les matières.

2. Trémie de tombereau selon la revendication 1, possédant des parois latérales (22,24), une section antérieure (26), des côtés surélevés, un écran (28) et des zones extérieures réalisées avec un composant polymère ou composées de polymères et de pièces d'acier.

3. Trémie de tombereau selon la revendication 1, les cordes parallèles se rétrécissant au cours du chargement de la trémie, puis reprenant leur longueur initiale lors du déchargement du corps.

4. Trémie de tombereau selon la revendication 1, les cordes parallèles étant disposées pour ajuster la structure à paroi latérale de la trémie par le biais d'un système de fixation composé de colliers et de boulons, dont le mécanisme est utilisé pour ajuster les contraintes des cordes.

5. Trémie de tombereau selon la revendication 4, ledit mécanisme comprenant un boîtier en plaque métallique comprenant, dans une de ses extrémités extérieures, deux orifices contenant deux boulons de réglage se vissant sur un verrou métallique pour supporter un bout respectif des cordes, lesdites cordes supportant à leur tour le tapis.

6. Trémie de tombereau selon la revendication 1, un fond de la structure d'acier étant composé de deux poutres longitudinales droites de forme carrée (32, 34) et trois ou quatre poutres elliptiques transversales de forme carrée (36, 38, 40) équidistantes et perpendiculaires aux poutres longitudinales (32, 34), et soutenant une paroi antérieure (16) et deux parois latérales (12, 14) de la trémie,
la paroi antérieure étant de forme rectangulaire et possédant un fond hexagonal hyperbolique, les parois latérales étant de forme trapézoïdale.

7. Trémie de tombereau selon la revendication 6, les parois latérales (12, 14) et la paroi antérieure (16) présentant des surfaces possédant des orifices de petite taille pour supporter, dans la surface intégrale, des boulons dont l'objet est la fixation du tapis, et, à son tour, d'assurer une protection contre les chocs et l'abrasion.

8. Trémie de tombereau selon une quelconque des revendications précédentes, le composant polymère se comportant comme un seul corps résistant, en absorbant des forces de virage et des forces de choc, ainsi que les forces d'impact et l'usure produites par les matières transportées, en évitant l'adhérence de matières adhésives et congelées, et en réduisant les bruits et les vibrations lors de l'utilisation.

9. Trémie de tombereau selon la revendication 3, les cordes étant composées de fibres de polyester recouvertes de caoutchouc sur toute leur longueur, et agencées pour s'adapter individuellement à la structure d'acier.

10. Trémie de tombereau selon la revendication 1, comprenant des blocs de caoutchouc amovibles et ajustables, agencés dans des secteurs externes de la structure d'acier de façon à constituer un écran et/ou assurer l'absorption des matières tombant hors de la trémie au cours du transport.

11. Trémie de tombereau selon la revendication 6, chacune des parois latérales (12, 14) comprenant, dans une de leurs parties supérieures, une suite de blocs de caoutchouc (100) incorporés dans la trémie par le biais de dispositifs mécaniques pour tenir compte d'une épaisseur d'acier réduite de la structure d'acier.

12. Trémie de tombereau selon la revendication 1, la structure d'acier (30) définissant un cadre sur lequel le composant polymère est accroché.

13. Trémie de tombereau selon la revendication 1 ou la revendication 12, possédant un corps interne revêtu de caoutchouc, de sorte que le poids de la trémie soit réduit et que la structure d'acier soit réalisée avec un acier d'épaisseur réduite, servant de support, et, conjointement avec une suspension ainsi améliorée de la charge utile, permettant l'augmentation de ladite charge sans augmentation de la résistance au roulement du tombereau.

14. Trémie de tombereau selon la revendication 1, le tapis étant de forme concave afin de permettre le centrage automatique de la charge placée dans celui-ci, en donnant lieu ainsi à une réduction des forces irrégulières dans la structure d'un châssis et les pneus du tombereau au cours du transport.
